# EUROPÄISCHE PATENTSCHRIFT

(11) **EP 1 626 169 B1**
(45) Veröffentlichungstag und Bekanntmachung des Hinweises auf die Patenterteilung: **06.02.2008**
(21) Anmeldenummer: 04103852.2
(22) Anmeldetag: 10.08.2004
(51) Int. Cl.: F02B 37/013, F02B 37/18

(54) **Regelungsvorrichtung für einen Verbrennungsmotor**
Control system for a combustion engine
Dispositif de contrôle d'un moteur à combustion

(43) Veröffentlichungstag der Anmeldung: 15.02.2006
(73) Patentinhaber: Ford Global Technologies, LLC, Dearborn, MI 48126 (US)
(72) Erfinder: Spaeder, Uwe, D-52066 Aachen (DE); Paffrath, Holger, Dr., D-50259 Pulheim (DE); Schorn, Norbert, D-52080 Aachen (DE); Kindl, Helmut, Dr., D-52066 Aachen (DE)
(74) Vertreter: Drömer, Hans-Carsten

(56) Entgegenhaltungen:
- EP-A- 0 864 737
- WO-A-91/18190
- DE-A1- 19 514 572
- US-A- 5 063 744
- US-A- 6 079 211
- PATENT ABSTRACTS OF JAPAN Bd. 007, Nr. 197 (M-239), 27. August 1983 (1983-08-27) & JP 58 096129 A (MITSUBISHI JUKOGYO KK), 8. Juni 1983 (1983-06-08)

## Beschreibung

Die Erfindung bezieht sich auf eine Regelungsvorrichtung für einen Verbrennungsmotor mit einer 2- stufig geregelten Turboaufladungsvorrichtung, umfassend eine erste und eine zweite, im Bereich des Abgaskrümmers des Verbrennungsmotors befindliche Turboeinheit, sowie wenigstens eine mit der ersten und mit der zweiten Turboeinheit in Wirkverbindung stehende Steuereinrichtung.

Aus dem Stand der Technik sind verschiedene Regelungsvorrichtungen für einen Verbrennungsmotor mit einer 2- stufig geregelten Turboaufladungsvorrichtung bekannt. Es ergibt sich dabei grundsätzlich das Erfordernis, für die Regelung des Abgasstromes in einer solchen 2- stufig geregelten Turboaufladungsvorrichtung eine Steuereinrichtung wie eine Steuerklappe vorzusehen, die zum einen einen hohen Abgasvolumenstrom mit einem niedrigen Strömungswiderstand vorsieht und die zum anderen auch den Abgasstrom in einem oder mehreren der Abgasrohre unterbinden kann bei gleichzeitiger minimaler Undichtigkeit. Es haben dabei die bekannten Kontrollventile nach Art von Kegelventilen eine niedrige Undichtigkeitsrate, aber diese Ventilart besitzt typischerweise einen zu hohen Druckverlust in der geöffneten Position. Andere Kontrollventilarten besitzen typischerweise eine hohe Undichtigkeitsrate in der geschlossenen Position, weil bei dieser Ventilart das Spiel um die Steuerklappe herum einfach zu groß ist, um den Unterschied in der thermischen Ausdehnung der Steuerklappe und des Abgasrohres kompensieren zu können. Bei dieser Art der Steuerklappen führen Bemühungen zur Reduzierung der Undichtigkeit gewöhnlich zu einer Erhöhung der Betätigungskräfte, was nicht akzeptierbar ist. An dieser Stelle soll die Erfindung helfend eingreifen und eine Regelungsvorrichtung bereitstellen, die gleichzeitig eine niedrige Undichtigkeitsrate und niedrige Betätigungskräfte ermöglicht, und die einen niedrigen Druckabfall in der geöffneten Position des Ventils erlaubt.

Zu dem Stand der Technik sei dazu beispielhaft auf die EP 0 537 179 B1 verwiesen. Es bezieht sich diese Druckschrift auf eine Vorrichtung zur Turboaufladungsregelung in einem Verbrennungsmotor mit einer ersten Turboeinheit und einer zweiten Turboeinheit, wobei die Turbinen und Kompressoren dieser Turboeinheiten auf den Auspuff- bzw. Luftansaugseiten des Motors aufeinanderfolgend angeordnet sind und aufweisend ein einziges Luftansaugrohr, ein erstes Ventil, das der ersten Turboeinheit zugeordnet und so angeordnet ist, daß die Motorverbrennungsgase in seinem geschlossenen Zustand zur Turbine der ersten Turboeinheit und in seinem offenen Zustand hinter die Turbine der ersten Turboeinheit geleitet werden, und ein zweites Ventil, das der zweiten Turboeinheit zugeordnet und so angeordnet ist, daß die Motorverbrennungsgase in seinem geschlossenen Zustand zur Turbine der zweiten Turboeinheit und in seinem offenen Zustand hinter die Turbine der zweiten Turboeinheit geleitet werden, wodurch ein kontinuierlicher Übergang zwischen dem Betrieb der ersten und zweiten Turboeinheiten bereitgestellt wird. Die Vorrichtung zur Turboaufladungsregelung umfaßt ferner eine Zentraleinheit, an die ein Motordrehzahlsensor sowie wenigstens ein Drucksensor angeschlossen ist, das ein Signal ausgibt, das wenigstens einen vorhandenen Druckpegel anzeigt, wobei die Zentraleinheit dazu ausgelegt ist, die Ventile ansprechend auf Signale von den Sensoren elektronisch zu steuern, und eine Kraftstoffqualitätsanzeigevorrichtung, die in dem Kraftstoffsystem so angeordnet ist, daß das Aufladeausmaß der Turboeinheiten durch die Zentraleinheit durch Berechnen von Sollwerten für den Ladedruck auf der Grundlage des Signals von der Anzeigeeinrichtung gesteuert werden kann.

In bevorzugter Ausgestaltung dieser Anordnung ist dabei vorgesehen, daß die erste Turboeinheit kleiner als die zweite Turboeinheit ausgebildet ist. Bei dem dargestellten Ausführungsbeispiel ist dabei die erste Turboeinheit zum Betrieb bei einer vergleichsweise niedrigen Verbrennungsgasströmung vorgesehen, und die zweite Turboeinheit ist zum Betrieb bei einer relativ hohen Verbrennungsgasströmung vorgesehen. Dabei ist das der ersten Turboeinheit zugeordnete erste Ventil bei niedrigen Drehzahlen geschlossen und das der zweiten Turboeinheit zugeordnete zweite Ventil ist bei niedrigen Drehzahlen offen. Die Kraftstoffqualitätsanzeigevorrichtung kann dabei zur Messung der Oktanzahl oder zur Messung der Kraftstoffzusammensetzung z. B. des Methanolgehaltes im Benzin ausgebildet sein.

Bei der in dieser EP 0 537 179 B1 beschriebenen Anordnung wird von der folgenden Problemstellung ausgegangen:

Die Anforderungen an zukünftige Motoren werden aufgrund der Forderung nach weniger Kraftstoffverbrauch, reduzierte Abgasemission, ein leichteres Gewicht, reduzierte Raumanforderungen, längere Lebensdauer und erhöhte Leistungskonzentration immer weiter zunehmen. Ein Weg, dies zu erreichen, besteht darin, einen ein kleineres Hubvolumen aufweisenden Auflademotor zu verwenden anstatt einen größeren Saugmotor. Durch Verwendung alternativer Kraftstoffe, vorzugsweise Motorgüte aufweisenden Methanolalkohol (M100 oder alternativ M85, wobei 100/85 den Anteil von Methanol im Kraftstoff angibt), wird es möglich, die Eigenschaften der hohen Oktanzahl dieser Kraftstoffe zu nutzen, um die Motorkompression zwecks eines höheren Wirkungsgrades zu erhöhen. Des weiteren kann in einem Auflademotor der Ladedruck erhöht werden, ohne daß es zu unkontrollierter Verbrennung (Klopfen) kommt. Von besonderem Interesse ist die Möglichkeit, den Betrag des Aufladens bei niedrigen Drehzahlen wie auch die Empfindlichkeit zu erhöhen, um ein höheres Drehmoment zu erzielen. Dies ist normalerweise aufgrund des Klopfrisikos bei herkömmlichen Motoren nicht möglich, wenn als Kraftstoff Benzin verwendet wird.

Aus der WO 91/18190 ist ein Verbrennungsmotor mit einer 2-stufig geregelten Turboaufladungsvorrichtung bekannt.

Reihenmotoren, beispielsweise (es sind ebenso andere Zylinderkonfigurationen möglich) des Verbrennungstyps, die vorzugsweise mit Methanol (M100 oder M85) betrieben werden, bieten gute Möglichkeiten, gut funktionierende Turboaufladebedingungen mit guter Kraftstoffwirtschaftlichkeit und reduzierten Abgasemissionen zu kombinieren. Bei hintereinander angeordneten Turboaufladeeinrichtungen ist es möglich, in einem weiten Drehzahlbereich optimale Wirkungsbedingungen zu erreichen. Eine kleine Turboeinheit, die so konfiguriert ist, daß sie bei niedrigen Drehzahlen effizient ist, kann mit einer größeren Einheit kombiniert werden, die primär für höhere Drehzahlen bis zum Vollastbereich des Motors ausgelegt ist. Durch Verwendung von Methanolkraftstoffen wie auch durch eine effizientere Aufladung werden die Gasmischung und der Zylinder nicht so stark erhitzt und die Bildung von Stickstoffoxidverbindungen (NOx- Verbindungen) wird reduziert.

Eine geregelte Aufladung, um einen drehmomentbezogenen Sollwert zu erreichen, die Verwendung von Methanolkraftstoffen und von sequentieller Turboaufladung schaffen in Kombination miteinander praktisch über den gesamten Drehzahlbereich ein hohes Drehmoment. Auf diese Weise können Leistungscharakteristiken erhalten werden, die es erlauben, daß ein großer Saugmotor durch einen Lademotor mit gleicher Leistung ersetzt werden kann, wie es zuvor erläutert wurde. Die erzielten Vorteile bestehen darin, daß der Motor für eine vorgesehene Leistungsabgabe unter einer hohen spezifischen Last mit sich daraus ergebenden reduzierten Pumpverlusten und Reibungsverlusten arbeitet. Das Ergebnis ist ein verbesserter spezifischer Kraftstoffverbrauch und ein niedrigerer Absolutverbrauch (entsprechend dem kleineren Motor, da aufgrund der Oktanzahl des Methanolkraftstoffes die Mindestkompression schwach bleiben kann).

Mit Hilfe der beschriebenen drehmomentengesteuerten Regelung (Sollwert als eine Funktion der Drehzahl) und mit Hilfe von Regelventilen mit besonderem Design soll ein Übergang von der kleinen Turboeinheit zur größeren Turboeinheit ohne Ladedruck- und Drehzahlabfälle ausgeführt werden können. Wünschenswert ist es hier, wie bereits oben schon erläutert wurde, eine Verbesserung dahingehend zu erzielen, daß eine Regelungsvorrichtung bereitgestellt wird, die insbesondere gleichzeitig eine niedrige Undichtigkeitsrate und niedrige Betätigungskräfte ermöglicht, und die einen niedrigen Druckabfall in der geöffneten Position des Ventils erlaubt.

Im weiteren ist aus der JP 2000238055 ein automatisches Zuführverfahren für ein Hauptmedium und/oder ein Zusatzmedium bekannt sowie eine Zuführeinrichtung dafür. Es soll mit diesem Verfahren insb. das Problem gelöst werden, ein Formteil herzustellen, dessen Qualität stabil ist, ohne die Produktivität herabzusetzen, und zwar mit einem Verfahren, bei dem die Zuführmenge eines Hauptmediums und/oder eines Zusatzmediums automatisch in Abhängigkeit eines Wechsels der auf der Oberfläche des Formteiles gemessenen Temperatur verändert wird. Es wird dabei eine Oberflächentemperatur mit einem Temperatursensor gemessen und zu einem elektrischen Signal umgewandelt, das von einer Umwandlungseinheit in einer mit dem Temperatursensoren verbundenen Schalteinheit aufgenommen wird, wobei ein Wechselspannungssignal in ein Gleichspannungssignal umgewandelt wird, um so einen Befehl in einem elektrischen Signal abzugeben, und zwar über eine Ausgabeeinheit, basierend auf einem integrierten Anzeigeprogramm, um auf diese Weise eine Konstantstrompumpe mit einem integrierten Umwandlermotor zu betätigen. Danach wird durch einen zusätzlichen Zuführkanal, der mit der Konstantstrompumpe mit dem integrierten Umwandlermotor verbunden ist, die Menge an zusätzlichem Medium, die auf Grundlage des Anzeigeprogrammes bestimmt worden ist, einer Sprühvorrichtung zugeführt, um so das zusätzliche Medium zusammen mit dem Hauptmedium gegen das Formteil zu richten, und zwar durch den Luftauslaß der Sprühvorrichtung. Dadurch kann die zugeführte Menge an zusätzlichem Medium in Abhängigkeit einer Änderung der Oberflächentemperatur des Formteiles eingestellt werden.

Ausgehend von den bekannten Regelungsvorrichtungen für einen Verbrennungsmotor mit einer 2- stufig geregelten Turboaufladungsvorrichtung liegt der Erfindung die Aufgabe zugrunde, die bekannten Anordnungen unter Beibehaltung der bisherigen Vorteile in der Weise zu verbessern bzw. weiterzuentwickeln, daß die Nachteile der zuvor diskutierten Lösungen vermieden werden, wobei insbesondere eine Regelungsvorrichtung bereitgestellt werden soll, die zum einen einen hohen Abgasvolumenstrom mit einem niedrigen Strömungswiderstand zuläßt und die zum anderen auch den Abgasstrom in einem oder mehreren der Abgasrohre unterbinden kann bei gleichzeitiger minimaler Undichtigkeit. Es sollen dabei gleichzeitig eine niedrige Undichtigkeitsrate und niedrige Betätigungskräfte ermöglicht werden, und die gewünschte Regelungsvorrichtung soll einen niedrigen Druckabfall in der geöffneten Position des Ventils erlauben. Die gewünschte Anordnung soll dabei im übrigen auch einfach und kostengünstig herstellbar sein.

Diese Aufgabe wird erfindungsgemäß dadurch gelöst, daß die erste Turboeinheit im Bereich oberhalb des Abgaskrümmers und die zweite Turboeinheit im Bereich unterhalb des Abgaskrümmers angeordnet ist, wobei im Bereich zwischen dem Auslaß der ersten, oberen Turboeinheit und dem Einlaß der zweiten, unteren Turboeinheit ein in dem Abgaskrümmer integrierter Anschlußbereich ausgebildet ist, es umfaßt dabei die zweite, untere Turboeinheit einen zweiteiligen, mit dem in dem Abgaskrümmer integrierten, andererseits mit der ersten, oberen Turboeinheit verbundenen, Anschlußbereich verbundenen Einlaß, es ist dabei in dem Durchgangsbereich von dem Anschlußbereich zu der zweiten, unteren Turboeinheit eine als Steuerklappe ausgebildete Steuereinrichtung angeordnet. Auf diese Weise wird erstmalig mit einfachen Mitteln die Möglichkeit geschaffen, die Nachteile der zuvor bekannten Lösungen zu vermeiden, wobei insbesondere eine Regelungsvorrichtung bereitgestellt wird, die zum einen einen hohen Abgasvolumenstrom mit einem niedrigen Strömungswiderstand zuläßt und die zum anderen auch den Abgasstrom in einem oder mehreren der Abgasrohre unterbinden kann bei gleichzeitiger minimaler Undichtigkeit. Es wird dabei gleichzeitig eine niedrige Undichtigkeitsrate und niedrige Betätigungskräfte ermöglicht, und die erfindungsgemäße Regelungsvorrichtung erlaubt einen niedrigen Druckabfall in der geöffneten Position des Ventils. Die erfindungsgemäße Regelungseinrichtung ist dabei im übrigen auch einfach und kostengünstig herstellbar.

Bei der bevorzugten Ausführungsform der vorliegenden Erfindung ist die Steuerklappe als Drosselklappe ausgebildet. Durch diese Ausbildung werden besonders vorteilhaft niedrige Betätigungskräfte realisiert.

Es empfiehlt sich nach einem weiteren Ausgestaltungsmerkmal der vorliegenden Erfindung, daß zur Ermöglichung einer thermischen Ausdehnung der Steuerklappe und des Leitungsabschnittes, in dem diese angeordnet ist, bei gleichzeitig minimaler Undichtigkeit der Durchgangsbereich von dem Anschlußbereich zu dem Einlaß der zweiten, unteren Turboeinheit möglichst offen ausgebildet ist. Es wird dadurch die Undichtigkeit im geschlossenen Zustand der Steuerklappe minimiert.

Nach einem weiteren Ausgestaltungsmerkmal der vorliegenden Erfindung ist vorgesehen, daß zur Verstärkung der Steuerklappe an dieser mehrere Verstärkungsrippen ausgebildet sind.

Zweckmäßig ist es nach einem weiteren Ausgestaltungsmerkmal der vorliegenden Erfindung, daß zur weiteren Reduzierung der Undichtigkeit das die Welle der Steuerklappe aufnehmende Gehäuse des Abgaskrümmers in dem Übergangsbereich von dem Anschlußbereich zu der zweiten, unteren Turboeinheit einseitig geschossen ausgebildet ist. Dadurch wird mit konstruktiv einfachen Mitteln eine weitere Reduzierung der Undichtigkeit erreicht.

Es empfiehlt sich nach einem weiteren Ausgestaltungsmerkmal der vorliegenden Erfindung, daß zur weiteren Reduzierung der Undichtigkeit auf der Welle der Steuerklappe wenigstens ein Kolbenring vorgesehen ist.

Nach einem letzten Merkmal der vorliegenden Erfindung ist vorgesehen, daß zur Erzeugung einer gewünschten Strömungscharakteristik die Gestaltung der Steuerklappe und des Leitungsabschnittes, in dem diese angeordnet ist, entsprechend angepaßt ausgebildet ist.

Die Erfindung ist in den Figuren der Zeichnung in einem Ausführungsbeispiel dargestellt. Es zeigen:
- Fig. 1: eine schematische Darstellung eines Teilbereiches der erfindungsgemäßen Regelungsvorrichtung in Vorderansicht,
- Fig. 2: eine schematische Querschnittsansicht eines Teilbereiches der erfindungsgemäßen Regelungsvorrichtung,
- Fig. 3: eine schematische Oberansicht der unteren Turbine der erfindungsgemäßen Regelungsvorrichtung mit zweiteiligem Einlaß,
- Fig. 4: eine schematische, perspektivische Oberansicht der unteren Turbine der erfindungsgemäßen Regelungsvorrichtung mit zweiteiligem Einlaß.
- Fig. 5: eine schematische, perspektivische Darstellung der erfindungsgemäßen Regelungsvorrichtung in eingebautem Zustand.

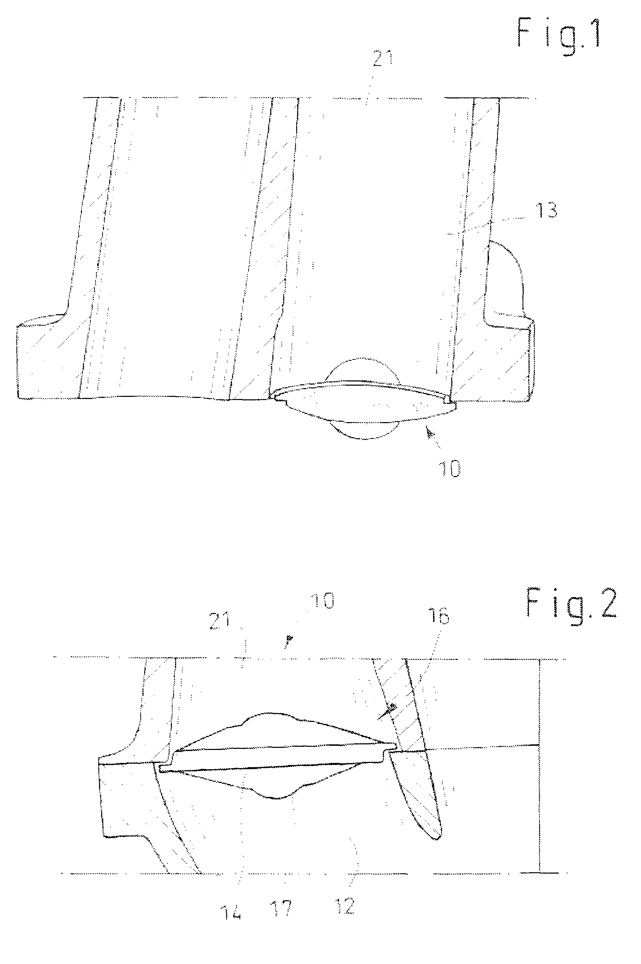

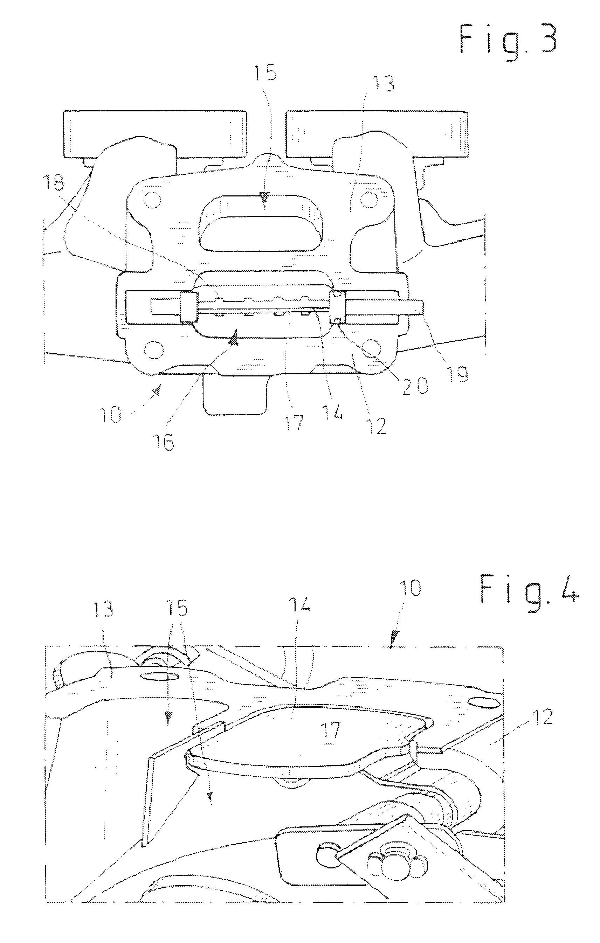

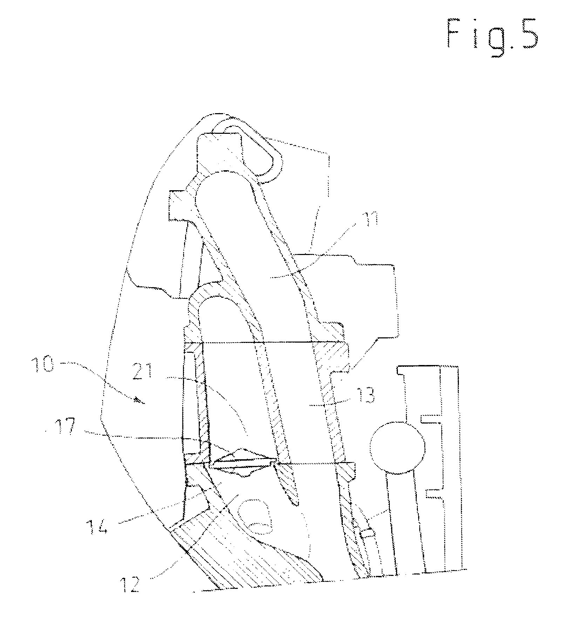

Die erfindungsgemäße Regelungsvorrichtung für einen Verbrennungsmotor mit einer 2- stufig geregelten Turboaufladungsvorrichtung ist generell mit 10 bezeichnet. Die erfindungsgemäße Regelungsvorrichtung 10 ist dazu in der Fig. 5 der Zeichnung in eingebautem Zustand dargestellt, wobei alle dargestellten, mit der erfindungsgemäßen Regelungsvorrichtung 10 nicht unmittelbar in Zusammenhang stehenden Bauteile einen an sich bekannten Aufbau aufweisen können und nachfolgend nicht näher beschrieben sind. Die Regelungsvorrichtung 10 umfaßt, siehe dazu zunächst die Fig. 5 der Zeichnung, eine erste mit 11 und eine zweite mit 12 bezeichnete, im Bereich des Abgaskrümmers 13 des Verbrennungsmotors befindliche Turboeinheit, sowie wenigstens eine mit der ersten und mit der zweiten Turboeinheit 11,12 in Wirkverbindung stehende Steuereinrichtung 14, siehe dazu die Fig. 2 der Zeichnung. Es ist dabei erfindungsgemäß vorgesehen, siehe dazu die Fig. 5 und 2 der Zeichnung i.V.m. den Fig. 3 und 4 der Zeichnung, daß die erste Turboeinheit 11 im Bereich oberhalb des Abgaskrümmers 13 und die zweite Turboeinheit 12 im Bereich unterhalb des Abgaskrümmers 13 angeordnet ist, wobei im Bereich zwischen dem Auslaß der ersten, oberen Turboeinheit 11 und dem Einlaß der zweiten, unteren Turboeinheit 12 ein in dem Abgaskrümmer 13 integrierter Anschlußbereich 21 ausgebildet ist. Dabei umfaßt die zweite, untere Turboeinheit 12, siehe die Fig. 3 und 4, einen zweiteiligen, mit dem in dem Abgaskrümmer 13 integrierten, andererseits mit der ersten, oberen Turboeinheit 11 verbundenen, Anschlußbereich 21 verbundenen Einlaß 15, es ist dabei in dem Durchgangsbereich 16 von dem Anschlußbereich 21 zu der zweiten, unteren Turboeinheit 12 eine als Steuerklappe 17 ausgebildete Steuereinrichtung 14 angeordnet. Es ist dazu in der Fig. 4 der Zeichnung diese Steuerklappe 17 in geschlossenem Zustand dargestellt, die dargestellten Lagerungs- bzw. Verstellmittel für diese Steuerklappe 17 können dabei in an sich bekannter Weise ausgebildet sein und werden hier nicht weiter beschrieben. Es wird durch diese Ausbildung eine Regelungsvorrichtung 10 bereitgestellt, die zum einen einen hohen Abgasvolumenstrom mit einem niedrigen Strömungswiderstand zuläßt und die zum anderen auch den Abgasstrom in einem oder mehreren der Abgasrohre unterbinden kann bei gleichzeitiger minimaler Undichtigkeit. Es wird dabei gleichzeitig eine niedrige Undichtigkeitsrate und niedrige Betätigungskräfte ermöglicht, und die erfindungsgemäße Regelungsvorrichtung 10 erlaubt einen niedrigen Druckabfall in der geöffneten Position des Ventils. Die erfindungsgemäße Regelungseinrichtung 10 ist dabei im übrigen auch einfach und kostengünstig herstellbar.

Bei der bevorzugten Ausführungsform der erfindungsgemäßen Regelungsvorrichtung 10 ist die Steuerklappe 17 als Drosselklappe ausgebildet. Durch diese Ausbildung werden besonders vorteilhaft niedrige Betätigungskräfte realisiert.

Zur Ermöglichung einer thermischen Ausdehnung der Steuerklappe 17 und des Leitungsabschnittes, in dem diese angeordnet ist, bei gleichzeitig minimaler Undichtigkeit ist, siehe z. B. wieder die Fig. 2, der Durchgangsbereich 16 von dem Anschlußbereich 21 zu dem Einlaß 15 der zweiten, unteren Turboeinheit 12 möglichst offen ausgebildet. Es wird dadurch die Undichtigkeit im geschlossenen Zustand der Steuerklappe 17 minimiert.

Zur Verstärkung der Steuerklappe 17 sind, siehe die Fig. 3 der Zeichnung, an dieser mehrere Verstärkungsrippen 18 ausgebildet. Weiterhin ist, siehe wieder die Fig. 3, zur weiteren Reduzierung der Undichtigkeit das die Welle 19 der Steuerklappe 17 aufnehmende Gehäuse des Abgaskrümmers 13 in dem Übergangsbereich von dem Anschlußbereich 21 zu der zweiten, unteren Turboeinheit 12 einseitig geschossen ausgebildet. Dadurch wird mit konstruktiv einfachen Mitteln eine weitere Reduzierung der Undichtigkeit erreicht.

Zur weiteren Reduzierung der Undichtigkeit ist außerdem, siehe wieder Fig. 3, auf der Welle 19 der Steuerklappe 17 ein Kolbenring vorgesehen, es ist dazu in dieser Fig. 3 auf der gegenüberliegenden Seite der Welle 19 eine Nut 20 in der Welle 19 für den selbst nicht dargestellten Kolbenring vorgesehen.

Außerdem ist vorgesehen, daß zur Erzeugung einer gewünschten Strömungscharakteristik die Gestaltung der Steuerklappe 17 und des Leitungsabschnittes, in dem diese angeordnet ist, entsprechend angepaßt ausgebildet ist.

Die erfindungsgemäße Regelungsvorrichtung 10 läßt erstmalig zum einen einen hohen Abgasvolumenstrom mit einem niedrigen Strömungswiderstand zu und unterbindet zum anderen auch den Abgasstrom in einem oder mehreren der Abgasrohre bei gleichzeitiger minimaler Undichtigkeit. Es wird dabei gleichzeitig eine niedrige Undichtigkeitsrate und niedrige Betätigungskräfte ermöglicht, und die erfindungsgemäße Regelungsvorrichtung 10 erlaubt einen niedrigen Druckabfall in der geöffneten Position des Ventils.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen im Rahmen des durch die Ansprüche definierten Schutzumfangs möglich. So können insb. die beiden Turboeinheiten 11,12 und der Abgaskrümmer 13 eine von den dargestellten Ausführungsformen abweichende Ausbildung aufweisen, weiterhin denkbar ist außerdem insbesondere eine abweichende Ausbildung oder Anordnung der Steuerklappe 17 und deren Lager- und Verstellmittel.

### BEZUGSZEICHENLISTE

- 10: Regelungsvorrichtung
- 11: erste Turboeinheit
- 12: zweite Turboeinheit
- 13: Abgaskrümmer
- 14: Steuereinrichtung
- 15: Einlaß (von 12)
- 16: Durchgangsbereich (zwischen 21 und 12)
- 17: Steuerklappe
- 18: Verstärkungsrippe (von 17)
- 19: Welle (von 17)
- 20: Nut für Kolbenring (an 19)
- 21: Anschlußbereich (zwischen 11 und 12)

## Patentansprüche

1. Verbrennungsmotor mit einer 2- stufig geregelten Turboaufladungsvorrichtung, umfassend eine erste und eine zweite, im Bereich des Abgaskrümmers (13) des Verbrennungsmotors befindliche Turboeinheit (11,12), sowie wenigstens eine mit der ersten und mit der zweiten Turboeinheit (11,12) in Wirkverbindung stehende Steuereinrichtung (14),
wobei die erste Turboeinheit (11) im Bereich oberhalb des Abgaskrümmers (13) und die zweite Turboeinheit (12) im Bereich unterhalb des Abgaskrümmers (13) angeordnet ist, wobei im Bereich zwischen dem Auslaß der ersten, oberen Turboeinheit (11) und dem Einlaß der zweiten, unteren Turboeinheit (12) ein in dem Abgaskrümmer (13) integrierter Anschlußbereich (21) ausgebildet
**dadurch gekennzeichnet, daß** die zweite, untere Turboeinheit (12) einen zweiteiligen Einlaß (15) umfasst, der mit dem Anschlußbereich (21) verbunden ist, welcher in dem Abgaskrümmer (13) integriert und mit der ersten, oberen Turboeinheit (11) verbunden ist, und
■ in einem Durchgangsbereich (16) von dem Anschlußbereich (21) zu der zweiten, unteren Turboeinheit (12) eine als Drosselklappe (17) ausgebildete Steuereinrichtung (14) angeordnet ist.

2. Verbrennungsmotor nach Anspruch 1,
**dadurch gekennzeichnet, daß**
zur Ermöglichung einer thermischen Ausdehnung der Drosselklappe (17) und des Leitungsabschnittes, in dem diese angeordnet ist, bei gleichzeitig minimaler Undichtigkeit der Durchgangsbereich (16) von dem Anschlußbereich 21 zu dem Einlaß (15) der zweiten, unteren Turboeinheit (12) möglichst offen ausgebildet ist.

3. Verbrennungsmotor nach einem der Ansprüche 1 bis 2,
**dadurch gekennzeichnet, daß**
zur Verstärkung der Drosselklappe (17) an dieser mehrere Verstärkungsrippen (18) ausgebildet sind.

4. Verbrennungsmotor nach einem der Ansprüche 1 bis 3,
**dadurch gekennzeichnet, daß**
zur weiteren Reduzierung der Undichtigkeit das die Welle (19) der Drosselklappe (17) aufnehmende Gehäuse des Abgaskrümmers (13) in dem Übergangsbereich von dem Anschlußbereich (21) zu der zweiten, unteren Turboeinheit (12) einseitig geschossen ausgebildet ist.

5. Verbrennungsmotor nach einem der Ansprüche 1 bis 4,
**dadurch gekennzeichnet, daß**
zur weiteren Reduzierung der Undichtigkeit auf der Welle (19) der Drosselklappe (17) wenigstens ein Kolbenring vorgesehen ist.

6. Verbrennungsmotor nach einem der Ansprüche 1 bis 5,
**dadurch gekennzeichnet, daß**
zur Erzeugung einer gewünschten Strömungscharakteristik die Gestaltung der Drosselklappe (17) und des Leitungsabschnittes, in dem diese angeordnet ist, entsprechend angepaßt ausgebildet ist.

## Claims

1. Internal combustion engine having a 2-stage regulated turbocharging device, comprising a first and a second turbo unit (11,12) which are arranged in the region of the exhaust manifold (13) of the internal combustion engine, and having at least one control device (14) which is operatively connected to the first and to the second turbo unit (11, 12),
with the first turbo unit (11) being arranged in the region above the exhaust manifold (13) and the second turbo unit (12) being arranged in the region below the exhaust manifold (13), with a connecting region (21), which is integrated into the exhaust manifold (13), being formed in the region between the outlet of the first, upper turbo unit (11) and the inlet of the second, lower turbo unit (12),
**characterized in that**
the second, lower turbo unit (12) comprises a two-part inlet (15) which is connected to the connecting region (21) which is integrated into the exhaust manifold (13) and is connected to the first, upper turbo unit (11), and a control device (14), which is embodied as a throttle flap (17), is arranged in a passage region (16) from the connecting region (21) to the second, lower turbo unit (12).

2. Internal combustion engine according to Claim 1,
**characterized in that**,
in order to permit thermal expansion of the throttle flap (17) and of the line section in which said throttle flap (17) is arranged, with simultaneously minimal leakage, the passage region (16) from the connecting region (21) to the inlet (15) of the second, lower turbo unit (12) is designed so as to be as open as possible.

3. Internal combustion engine according to one of Claims 1 to 2,
**characterized in that**,
in order to reinforce the throttle flap (17), the latter has formed on it a plurality of reinforcement ribs (18).

4. Internal combustion engine according to one of Claims 1 to 3,
**characterized in that**,
in order to further reduce leakage, the housing, which holds the shaft (19) of the throttle flap (17), of the exhaust manifold (13) is designed so as to be closed at one side in the transition region from the connecting region (21) to the second, lower turbo unit (12).

5. Internal combustion engine according to one of Claims 1 to 4,
**characterized in that**,
in order to further reduce the leakage, at least one piston ring is provided on the shaft (19) of the throttle flap (17).

6. Internal combustion engine according to one of Claims 1 to 5,
**characterized in that**,
in order to generate a desired flow characteristic, the configuration of the throttle flap (17) and of the line section in which the latter is arranged is designed in a correspondingly adapted manner.

## Revendications

1. Moteur à combustion interne comprenant un dispositif de suralimentation régulé à deux étages, comprenant une première et une deuxième unités turbo (11, 12) situées dans la région du collecteur de gaz d'échappement (13) du moteur à combustion interne, ainsi qu'au moins un dispositif de commande (14) en liaison fonctionnelle avec la première et la deuxième unités turbo (11, 12),
la première unité turbo (11) étant disposée dans la région au-dessus du collecteur de gaz d'échappement (13) et la deuxième unité turbo (12) étant disposée dans la région en dessous du collecteur de gaz d'échappement (13), dans la région entre la sortie de la première unité turbo supérieure (11) et l'entrée de la deuxième unité turbo inférieure (12), étant réalisée une région de raccordement (21) intégrée dans le collecteur de gaz d'échappement (13),
**caractérisé en ce que**
la deuxième unité turbo inférieure (12) comprend une entrée en deux parties (15), qui est connectée à la région de raccordement (21), qui est intégrée dans le collecteur de gaz d'échappement (13) et qui est connectée à la première unité turbo supérieure (11), et
**en ce qu'**un dispositif de commande (14) réalisé sous forme de clapet d'étranglement (17) est disposé dans une région de passage (16) de la région de raccordement (21) à la deuxième unité turbo inférieure (12).

2. Moteur à combustion interne selon la revendication 1,
**caractérisé en ce que**
pour permettre une dilatation thermique du clapet d'étranglement (17) et de la section de conduite dans laquelle il est disposé, pour un défaut d'étanchéité minime, la région de passage (16) de la région de raccordement (21) à l'entrée (15) de la deuxième unité turbo inférieure (12) est réalisée aussi ouverte que possible.

3. Moteur à combustion interne selon l'une quelconque des revendications 1 à 2,
**caractérisé en ce que**
pour renforcer le clapet d'étranglement (17), on réalise sur celui-ci plusieurs nervures de renforcement (18).

4. Moteur à combustion interne selon l'une quelconque des revendications 1 à 3,
**caractérisé en ce que**
pour une réduction supplémentaire du défaut d'étanchéité, le boîtier du collecteur de gaz d'échappement (13) recevant l'arbre (19) du clapet d'étranglement (17) est réalisé fermé d'un côté dans la région de transition de la région de raccordement (21) à la deuxième unité turbo inférieure (12).

5. Moteur à combustion interne selon l'une quelconque des revendications 1 à 4,
**caractérisé en ce que**
pour une réduction supplémentaire du défaut d'étanchéité, on prévoit au moins un segment de piston sur l'arbre (19) du clapet d'étranglement (17).

6. Moteur à combustion interne selon l'une quelconque des revendications 1 à 5,
**caractérisé en ce que**
pour produire une caractéristique d'écoulement souhaitée, la configuration du clapet d'étranglement (17) et de la section de conduite dans laquelle il est disposé, est réalisée de manière adaptée en conséquence.
